# FASCICULE DE BREVET EUROPEEN

(11) **EP 3 724 604 B1**
(45) Date de publication et mention de la délivrance du brevet: **26.01.2022**
(21) Numéro de dépôt: 18811312.0
(22) Date de dépôt: 06.12.2018
(51) Int. Cl.: G01C 21/16, F16F 15/02, F16F 1/38, F16F 15/08

(54) **UNITÉ INERTIELLE AMÉLIORÉE À DISPOSITIF INERTIEL SUSPENDU**
VERBESSERTE TRÄGHEITSEINHEIT MIT AUFGEHÄNGTER TRÄGHEITSVORRICHTUNG
IMPROVED INERTIAL UNIT WITH SUSPENDED INERTIAL DEVICE

(30) Priorité: 12.12.2017 FR 1762016
(43) Date de publication de la demande: 21.10.2020
(73) Titulaire: SAFRAN ELECTRONICS & DEFENSE, 75015 Paris (FR)
(72) Inventeur: GIORGIO, Alain, 77550 Moissy-Cramayel (FR)
(74) Mandataire: Lavialle, Bruno François Stéphane
(86) Numéro de dépôt international: PCT/EP2018/083848
(87) Numéro de publication internationale: WO 2019/115359

(56) Documents cités:
- EP-A2- 2 000 697
- FR-A1- 3 039 641
- US-A1- 2004 150 144

## Description

La présente invention concerne le domaine de la mesure inertielle et plus particulièrement, mais pas exclusivement, la navigation inertielle.

### ETAT DE LA TECHNIQUE

Il est connu des unités inertielles comprenant un dispositif inertiel, comme un capteur inertiel ou une centrale inertielle, pourvu de plots de fixation permettant la fixation du dispositif inertiel à un châssis support rapporté sur le véhicule, avec ou sans plaque interface, que la centrale inertielle est destinée à équiper, ou solidaire de ce véhicule.

Chaque plot de fixation comprend une platine délimitant un alésage dans lequel est suspendu un insert relié à la platine par un corps en matériau élastiquement déformable.

La platine possède une semelle pour être en appui contre le châssis support et des moyens de son ancrage au châssis support.

L'insert a une forme tubulaire avec une première face d'extrémité pour prendre appui contre le dispositif inertiel. L'insert délimite un conduit recevant une vis ayant un tronçon fileté qui s'étend en saillie de la première face d'extrémité pour être engagé dans un taraudage du dispositif inertiel.

Le corps en matériau élastiquement déformable a une forme annulaire avec un bord externe solidaire de la paroi de l'alésage de la platine et un bord interne solidaire d'une surface extérieure de l'insert.

Lorsque la platine du plot de fixation est fixée au châssis et l'insert est fixé au dispositif inertiel, l'insert ne touche pas le châssis et le bâti ne touche pas la platine. Ainsi, rien ne vient entraver les mouvements relatifs du bâti et de la platine qu'autorise le corps en matériau élastiquement déformable. Le corps en matériau élastiquement déformable peut ainsi amortir la transmission au dispositif inertiel des mouvements et des chocs qu'aurait subis le châssis. De tels mouvements ou chocs peuvent dégrader les performances du dispositif inertiel temporairement voire durablement.

EP 2 000 697 A2 divulgue une unité comprenant un dispositif inertiel de détection pourvu de plots de fixation permettant la fixation du dispositif inertiel à un châssis support, au moins un des plots de fixation comprenant deux éléments qui sont fixés pour l'un au châssis support en ayant une surface d'appui au contact d'une surface d'appui du châssis support et pour l'autre au dispositif inertiel en ayant une surface d'appui au contact d'une surface d'appui du dispositif inertiel et qui sont suspendus l'un par rapport à l'autre au moyen d'un corps en matériau élastiquement déformable au moins l'un des éléments étant fixé par au moins une vis.

Malgré cela, les dispositifs inertiels n'ont pas toujours les performances attendues sous certaines sollicitations mécaniques.

### OBJET DE L'INVENTION

Un but de l'invention est de fournir un moyen pour améliorer les performances des dispositifs inertiels.

### BREF EXPOSE DE L'INVENTION

A cet effet, on prévoit, selon l'invention, une unité inertielle comprenant un dispositif inertiel de détection pourvu de plots de fixation permettant la fixation du dispositif inertiel à un châssis support. Au moins un des plots de fixation comprend deux éléments qui sont fixés, pour l'un, au châssis support en ayant une surface d'appui au contact d'une surface d'appui du châssis support et, pour l'autre, au dispositif inertiel en ayant une surface d'appui au contact d'une surface d'appui du dispositif inertiel, et qui sont suspendus l'un par rapport à l'autre au moyen d'un corps en matériau élastiquement déformable. Au moins l'un des éléments est fixé par au moins une vis. Les surfaces d'appui correspondantes sont respectivement pourvues d'une portion de centrage et d'un logement recevant ladite portion de centrage avec un ajustement permettant un jeu d'au plus 50 µm.

On s'est aperçu que, dans les dispositifs de l'art antérieur, il arrive que l'insert se déplace par rapport au dispositif inertiel sous l'effet de chocs, vibrations ou brusques mouvements. Ce déplacement engendre des contraintes mécaniques qui, mêmes minimes, peuvent altérer les performances du dispositif inertiel. La portion de centrage va empêcher ce glissement ou en tout cas le limiter.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :

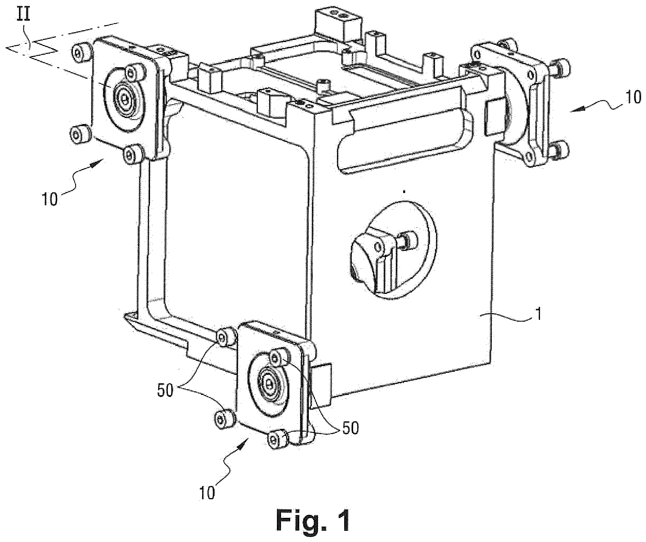

- la figure 1 est une vue en perspective d'un dispositif inertiel selon l'invention ;
- la figure 2 est une vue partielle de ce dispositif inertiel en coupe selon le plan II de la figure 1
- la figure 3 est une vue en perspective d'un plot de fixation selon une variante de réalisation.

### DESCRIPTION DETAILLEE DE L'INVENTION

En référence aux figures, l'unité inertielle selon l'invention comprend un cœur inertiel, non visible sur les figures, monté dans un bâti sensiblement de forme cubique. Le bâti et le cœur inertiel forme un dispositif inertiel 1.

Le cœur inertiel est connu en lui-même et comprend des capteurs inertiels linéaires et des capteurs inertiels angulaires disposés selon les axes d'un repère de mesure. Les capteurs inertiels linéaires sont des accéléromètres par exemple pendulaires. Les capteurs angulaires sont des gyromètres ou des gyroscopes. Le cœur inertiel comprend également une unité de traitement des signaux provenant des capteurs inertiels.

Le bâti du dispositif inertiel 1 est pourvu de plots de fixation 10 permettant la fixation du dispositif inertiel 1 à un châssis support 100.

Chaque plot de fixation 10 comprend un premier élément formé d'une platine 20 délimitant un alésage 21 dans lequel est suspendu un deuxième élément formé d'un insert, généralement désigné en 40, relié à la platine 20 par un corps 60 en matériau élastiquement déformable.

L'alésage 21 comprend une première extrémité orientée vers le bâti du dispositif inertiel 1 et une deuxième extrémité orientée à l'opposé, et possède un axe central sensiblement perpendiculaire à une semelle par laquelle la platine 20 prend appui contre le châssis support 100. L'alésage 21 comprend un premier tronçon cylindrique 21.1 de plus grand diamètre du côté de la première extrémité, un deuxième tronçon cylindrique 21.2 de plus petit diamètre du côté de la deuxième extrémité, et un tronçon tronconique 21.3 reliant les tronçons cylindriques 21.1, 21.2 l'un à l'autre. La platine 20 comprend des moyens de son ancrage au châssis support 100, ici sous la forme de trous permettant le passage de vis de fixation 50 engagées dans des taraudages du châssis support 100 ou de taraudages dans lesquels sont engagées des vis passant par des trous ménagés dans le châssis support 100.

L'insert 40 a une forme de révolution avec une première face d'extrémité 41 pour prendre appui contre une surface 4 du bâti du dispositif inertiel 1 et, à l'opposé, une deuxième face d'extrémité 42. L'insert 40 comprend une portion de centrage 43 s'étendant en saillie du centre de la première face d'extrémité 41 et délimite un conduit 44 central débouchant d'une part au centre de la portion de centrage 43 et d'autre part au centre de la deuxième face d'extrémité 42. Le conduit 44 est ici étagé et comprend un tronçon principal débouchant au centre de la portion de centrage 43 et un lamage d'entrée débouchant au centre de la deuxième face d'extrémité 42. Le tronçon principal est destiné à accueillir un corps d'une vis 70 ayant une tête accueillie dans le lamage d'entrée de telle manière que le corps ait un tronçon d'extrémité fileté s'étendant en saillie de la portion de centrage 43. Le tronçon d'extrémité fileté qui s'étend en saillie de la portion de centrage 43 est engagé dans un taraudage 2 débouchant par un lamage d'entrée 3 sur la surface 4 du bâti du dispositif inertiel 1 et la tête de la vis 70 est accessible depuis la deuxième face d'extrémité 42 de l'insert 40. La portion de centrage 43 est reçue dans le lamage d'entrée 3 du taraudage 2 avec un ajustement glissant pour assurer un ajustement glissant pour assurer un centrage de l'insert 40 sur le bâti du dispositif inertiel 1 qui soit suffisant pour empêcher qu'un déplacement relatif de l'insert 40 et du bâti du dispositif inertiel 1 n'engendre des contraintes mécaniques susceptibles d'altérer les performances du dispositif inertiel 1. L'ajustement glissant est ici de préférence du type H7g6. La portion de centrage 43 ne touche pas le fond du lamage d'entrée 3 et a une longueur suffisamment faible pour assurer un centrage court.

L'insert 40 a une longueur totale supérieure à celle de la platine 20 (longueurs mesurées parallèlement aux axes centraux de l'alésage 21 et du conduit 44).

La surface externe de l'insert 40 est une surface de révolution qui comprend un premier tronçon cylindrique 45.1 de plus grand diamètre du côté de la première face d'extrémité 41, un deuxième tronçon cylindrique 45.2 de plus petit diamètre du côté de la deuxième face d'extrémité 42, et un tronçon tronconique 45.3 reliant les tronçons cylindriques 45.1, 45.2 l'un à l'autre.

Le tronçon cylindrique 21.2 s'étend en regard du tronçon cylindrique 45.2, le tronçon tronconique 21.3 s'étend en regard du tronçon tronconique 45.3 et le tronçon cylindrique 21.1 s'étend en regard du tronçon tronconique 45.3. Le premier tronçon cylindrique 45.1 et la partie adjacente du tronçon tronconique 45.3 s'étendent au-delà de la première extrémité de l'alésage 21 en saillie de la platine 40. Les tronçons cylindriques 21.1, 21.2 ont des diamètres très supérieurs, de plusieurs millimètres, aux tronçons cylindriques 45.1, 45.2.

Le tronçon tronconique 21.3 est ainsi orienté vers le bâti du dispositif inertiel 1 et a le même angle que le tronçon tronconique 45.3 qui est orienté vers le tronçon tronconique 21.3 de l'alésage 21.

Le corps 60 est ici en matériau élastomère et est agencé pour rappeler élastiquement l'insert 40, d'une part latéralement, dans une position coaxiale par rapport à l'alésage 21 et, d'autre part longitudinalement, dans une position en saillie de la platine 20 vers le bâti du dispositif inertiel 1. Le corps 60 a, à cette fin, une forme annulaire avec une surface externe épousant et recouvrant totalement la surface de l'alésage 21 et une surface interne épousant et recouvrant totalement la surface externe de l'insert 40. Le corps 60, qui est d'une seule pièce, a ainsi : une première portion annulaire qui s'étend entre le tronçon tronconique 45.3 d'une part et le tronçon tronconique 21.3 et le premier tronçon cylindrique 21.1 d'autre part ; et une deuxième portion annulaire qui s'étend entre les deuxièmes tronçons cylindriques 45.2, 21.2. La deuxième portion annulaire comprend une surface d'extrémité concave à concavité orientée comme la deuxième face d'extrémité 42. La surface d'extrémité concave présente ici une gorge plane ayant une section transversale sensiblement en forme de U.

De préférence, le corps 60 est surmoulé sur la platine 20 et l'insert 40 de sorte que sa surface externe est solidaire, par adhésion, de la paroi de l'alésage 21 de la platine 20 et sa surface interne est solidaire, par adhésion, de la surface extérieure de l'insert 40.

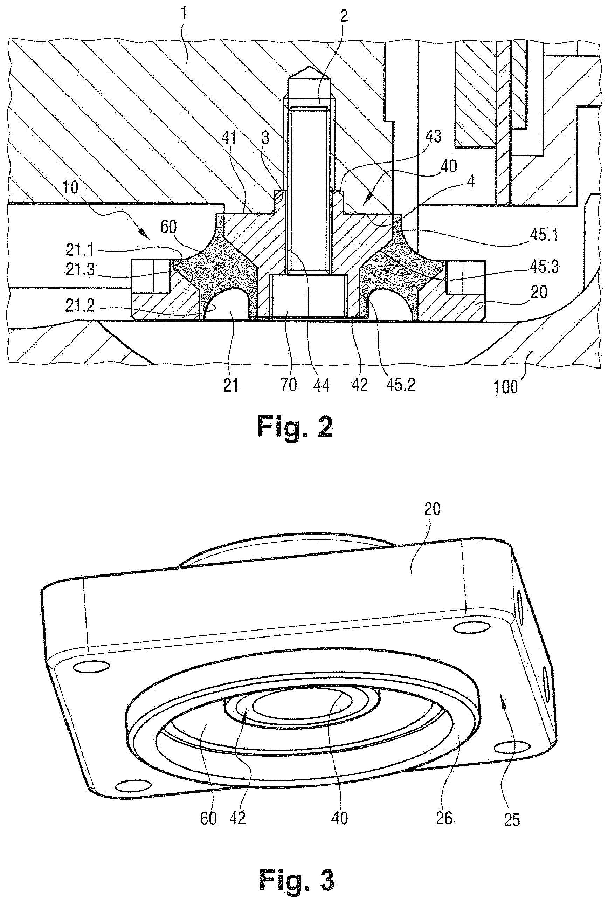

En variante, comme représenté sur la figure 3, la portion de centrage et le logement sont disposés au niveau du contact entre les surfaces d'appui du châssis support 100 et de la platine 20.

Plus précisément, la platine 20 a une surface d'appui 25 contre le châssis support 100. Une portion de centrage 26, sous la forme d'une couronne annulaire, s'étend en saillie de la surface d'appui 25 coaxialement à l'alésage 21.

Le châssis support 100 comprend alors, sur sa surface d'appui en contact avec la surface d'appui 25, un renfoncement agencé pour accueillir la portion de centrage 26. Le renfoncement a par exemple la forme d'un alésage recevant la portion de centrage 25 avec un jeu de 50 µm maximum.

En variante, la portion de centrage 26 peut s'étendre en saillie de la surface d'appui du châssis support 100 et le logement destiné à accueillir ladite portion de centrage peut être ménagé dans la platine 20.

L'ajustement de la portion de centrage 26 du châssis support dans le logement de la platine peut être serré ou glissant jusqu'à un ajustement autorisant un jeu de 50 µm.

Bien entendu, l'invention n'est pas limitée aux modes de réalisation décrits mais englobe toute variante entrant dans le champ de l'invention telle que définie par les revendications.

En particulier, l'insert peut avoir une autre forme et en particulier une autre forme extérieure de même que l'alésage peut avoir une autre forme.

Le corps 60 peut avoir d'autres formes que celle décrite et par exemple il peut ne pas recouvrir en totalité la paroi de l'alésage et/ou la surface externe de l'insert.

Le corps 60 peut être formé de plusieurs pièces, par exemple plusieurs segments angulaires séparés.

Les vis peuvent être vissées dans la platine et/ou dans l'insert.

Le diamètre du premier tronçon cylindrique 45.1 peut être inférieur à celui du deuxième tronçon cylindrique 21.2.

La portion de centrage peut être formée par le premier tronçon cylindrique 45.1.

La portion de centrage 43 peut s'étendre en saillie de la surface d'appui du dispositif inertiel 1 et le logement destiné à accueillir ladite portion de centrage peut être ménagé dans l'insert 40.

L'ajustement de la portion de centrage 43 dans le logement 3 peut être serré ou glissant jusqu'à un ajustement autorisant un jeu de 50 µm.

La portion de centrage 43 peut être désaxée par rapport au conduit 44.

## Revendications

1. Unité comprenant un dispositif inertiel de détection (1) pourvu de plots de fixation (10) permettant la fixation du dispositif inertiel à un châssis support (100), au moins un des plots de fixation (10) comprenant deux éléments qui sont fixés pour l'un au châssis support en ayant une surface d'appui au contact d'une surface d'appui du châssis support et pour l'autre au dispositif inertiel en ayant une surface d'appui au contact d'une surface d'appui du dispositif inertiel et qui sont suspendus l'un par rapport à l'autre au moyen d'un corps en matériau élastiquement déformable, au moins l'un des éléments étant fixé par au moins une vis et **caractérisée en ce que** les surfaces d'appui correspondantes étant respectivement pourvues d'une portion de centrage (43) et d'un logement (3) recevant ladite portion de centrage avec un ajustement permettant un jeu d'au plus 50µm.

2. Unité selon la revendication 1, dans laquelle l'un des éléments est une platine (20) ayant des moyens de son ancrage au châssis support et délimitant un alésage (21), et l'autre des éléments est un insert (40) maintenu suspendu dans l'alésage par le corps en matériau élastiquement déformable (60), l'insert (40) ayant une première face d'extrémité (41) qui forme la surface d'appui en contact avec la surface d'appui du dispositif inertiel (1) et délimitant un conduit (44) recevant une vis (70) ayant un tronçon fileté qui s'étend en saillie de la première face d'extrémité pour être engagé dans un taraudage (2) du dispositif inertiel (1).

3. Unité selon la revendication 2, dans laquelle la portion de centrage (43) s'étend en saillie de la première face d'extrémité (41).

4. Unité selon la revendication 2 ou la revendication 3, dans laquelle la portion de centrage (43) est coaxiale au conduit (44).

5. Unité selon l'une quelconque des revendications 2 à 4, dans laquelle la platine (20) possède une semelle pour être en appui contre le châssis support (100).

6. Unité selon l'une quelconque des revendications 2 à 5, dans laquelle l'alésage (21) comprend un tronçon tronconique (21.3) orienté vers le dispositif inertiel (1) et l'insert (40) comprend un tronçon de surface externe tronconique (45.3) orientée vers le tronçon tronconique (21.3) de l'alésage (21), une portion annulaire du corps en matériau élastiquement déformable (60) s'étendant entre le tronçon tronconique (21.3) de l'alésage (21) et le tronçon de surface externe tronconique (45.3) de l'insert (40).

7. Unité selon la revendication 6, dans laquelle l'insert (40) comprend du côté de la deuxième face d'extrémité (42) un tronçon de surface externe cylindrique (45.2) en regard d'un tronçon cylindrique (21.2) de l'alésage (21), le corps en matériau élastiquement déformable (60) comprenant entre le tronçon de surface externe cylindrique (45.2) de l'insert (40) et le tronçon cylindrique (21.2) de l'alésage (21) une partie annulaire concave à concavité orientée comme la deuxième face d'extrémité (42).

8. Unité selon la revendication 7, dans laquelle l'insert (40) comprend du côté de la première face d'extrémité (41) un tronçon de surface externe cylindrique (45.1) s'étendant en saillie de la platine (20).

9. Unité selon l'une quelconque des revendications 2 à 8, dans laquelle le corps en matériau élastiquement déformable (60) a une forme annulaire avec une surface externe solidaire de l'alésage (21) de la platine (20) et une surface interne solidaire d'une surface extérieure de l'insert (40).

10. Unité selon l'une quelconque des revendications 2 à 9, dans laquelle la portion de centrage (43) s'étend en saillie de la surface d'appui du dispositif inertiel et le logement est ménagé dans l'insert (40).

11. Unité selon la revendication 1 ou la revendication 2, dans laquelle la portion de centrage et le logement sont disposés au niveau du contact entre les surfaces d'appui du châssis support et de l'élément correspondant.

12. Unité selon l'une quelconque des revendications précédentes, dans laquelle l'ajustement glissant est H7g6.

13. Unité selon l'une quelconque des revendications précédentes, dans laquelle la portion de centrage est agencée pour assurer un centrage court.

## Patentansprüche

1. Einheit, umfassend eine Trägheitsdetektionsvorrichtung (1), die mit Befestigungsbolzen (10) versehen ist, die die Befestigung der Trägheitsvorrichtung an einem Trägerrahmen (100) ermöglichen, wobei mindestens einer der Befestigungsbolzen (10) zwei Elemente umfasst, von denen eines an dem Trägerrahmen befestigt ist und eine Auflagefläche in Kontakt mit einer Auflagefläche des Trägerrahmens hat, und von denen das andere an der Trägheitsvorrichtung befestigt ist und eine Auflagefläche in Kontakt mit einer Auflagefläche der Trägheitsvorrichtung hat, und die relativ zueinander mittels eines Körpers aus elastisch verformbarem Material aufgehängt sind, wobei mindestens eines der Elemente durch mindestens eine Schraube befestigt ist, und **dadurch gekennzeichnet, dass** die entsprechenden Auflageflächen mit einem Zentrierabschnitt (43) bzw. einer Aufnahme (3) versehen sind, die den Zentrierabschnitt mit einer Passung aufnimmt, die ein Spiel von höchstens 50µm ermöglicht.

2. Einheit nach Anspruch 1, bei der eines der Elemente eine Platte (20) ist, die Mittel für ihre Verankerung an dem Trägerrahmen hat und eine Bohrung (21) begrenzt, und das andere der Elemente ein Einsatz (40) ist, der in der Bohrung durch den Körper (60) aus elastisch verformbarem Material hängend gehalten wird, wobei der Einsatz (40) eine erste Endfläche (41) hat, die die Auflagefläche in Kontakt mit der Auflagefläche der Trägheitsvorrichtung (1) bildet und eine Leitung (44) begrenzt, die eine Schraube (70) aufnimmt, die einen Gewindeabschnitt hat, der von der ersten Endfläche vorsteht, um in ein Innengewinde (2) der Trägheitsvorrichtung (1) eingefügt zu werden.

3. Einheit nach Anspruch 2, bei der der Zentrierabschnitt (43) von der ersten Endfläche (41) vorsteht.

4. Einheit nach Anspruch 2 oder Anspruch 3, bei der der Zentrierabschnitt (43) koaxial zur Leitung (44) ist.

5. Einheit nach einem der Ansprüche 2 bis 4, bei der die Platte (20) eine Sohle zur Anlage an dem Trägerrahmen (100) umfasst.

6. Einheit nach einem der Ansprüche 2 bis 5, bei der die Bohrung (21) einen kegelstumpfförmigen Abschnitt (21.3) umfasst, der zur Trägheitsvorrichtung (1) gerichtet ist, und der Einsatz (40) einen Abschnitt (45.3) mit kegelstumpfförmiger Außenfläche umfasst, die zum kegelstumpfförmigen Abschnitt (21.3) der Bohrung (21) gerichtet ist, wobei sich ein ringförmiger Abschnitt des Körpers (60) aus elastisch verformbarem Material zwischen dem kegelstumpfförmigen Abschnitt (21.3) der Bohrung (21) und dem Abschnitt (45.3) mit kegelstumpfförmiger Außenfläche des Einsatzes (40) erstreckt.

7. Einheit nach Anspruch 6, bei der der Einsatz (40) auf der Seite der zweiten Endfläche (42) einen Abschnitt (45.2) mit zylindrischer Außenfläche gegenüber einem zylindrischen Abschnitt (21.2) der Bohrung (21) umfasst, wobei der Körper (60) aus elastisch verformbarem Material zwischen dem Abschnitt (45.2) mit zylindrischer Außenfläche des Einsatzes (40) und dem zylindrischen Abschnitt (21.2) der Bohrung (21) einen konkaven ringförmigen Abschnitt mit einer Konkavität hat, die wie die zweite Endfläche (42) ausgerichtet ist.

8. Einheit nach Anspruch 7, bei der der Einsatz (40) auf der Seite der ersten Endfläche (41) einen Abschnitt (45.1) mit zylindrischer Außenfläche umfasst, der von der Platte (20) vorsteht.

9. Einheit nach einem der Ansprüche 2 bis 8, bei der der Körper (60) aus elastisch verformbarem Material eine ringförmige Form mit einer Außenfläche, die fest mit der Bohrung (21) der Platte (20) verbunden ist, und einer Innenfläche hat, die fest mit einer Außenfläche des Einsatzes (40) verbunden ist.

10. Einheit nach einem der Ansprüche 2 bis 9, bei der der Zentrierabschnitt (43) von der Auflagefläche der Trägheitsvorrichtung vorsteht und die Aufnahme in dem Einsatz (40) ausgebildet ist.

11. Einheit nach Anspruch 1 oder Anspruch 2, bei der der Zentrierabschnitt und die Aufnahme im Bereich des Kontakts zwischen den Auflageflächen des Trägerrahmens und des entsprechenden Elements angeordnet sind.

12. Einheit nach einem der vorhergehenden Ansprüche, bei der der Gleitsitz H7g6 ist.

13. Einheit nach einem der vorhergehenden Ansprüche, bei der der Zentrierabschnitt ausgebildet ist, um eine kurze Zentrierung sicherzustellen.

## Claims

1. Equipment comprising an inertial detector device (1) provided with fastener studs (10) enabling the inertial device to be fastened to a support frame (100), at least one of the fastener studs (10) comprising two elements, one of which elements is fastened to the support frame and has a bearing surface that is in contact with a bearing surface of the support frame, and the other of which elements is fastened to the inertial device and has a bearing surface that is in contact with a bearing surface of the inertial device, which two elements are suspended relative to each other by means of a body made of elastically deformable material, at least one of the elements being fastened by at least one screw, **characterized in that** the corresponding bearing surfaces are provided respectively with a centering portion (43) and with a housing (3) for receiving said centering portion with a fit that allows clearance of no more than 50 µm.

2. Equipment according to claim 1, wherein one of the elements is a shoe (20) having means for anchoring it to the support frame and defining a bore (21), and the other elements is an insert (40) held suspended in the bore by the body (60) of elastically deformable material, the insert (40) having a first end face (41) that forms the bearing surface in contact with the surface of the inertial device (1) and defining a duct (44) receiving a screw (70) having a threaded segment that projects from the first end face so as to be engaged in a tapped hole (2) in the inertial device (1).

3. Equipment according to claim 2, wherein the centering portion (43) projects from the first end face (41).

4. Equipment according to claim 2 or claim 3, wherein the centering portion (43) is coaxial with the duct (44).

5. Equipment according to any one of claims 2 to 4, wherein the shoe (20) possesses a sole for bearing against the support frame (100).

6. Equipment according to any one of claims 2 to 5, wherein the bore (21) includes a frustoconical segment (21.3) facing towards the inertial device (1), and the insert (40) includes a segment (45.3) of frustoconical outside surface facing towards the frustoconical segment (21.3) of the bore (21), an annular portion of the body (60) made of elastically deformable material extending between the frustoconical segment (21.3) of the bore (21) and the segment (45.3) of frustoconical outside surface of the insert (40).

7. Equipment according to claim 6, wherein the insert (40) includes, beside the second end face (42), a segment (45.2) of cylindrical outside surface facing a cylindrical segment (21.2) of the bore (21), the body (60) made of elastically deformable material including, between the segment (45.2) of cylindrical outside surface of the insert (40) and the cylindrical segment (21.2) of the bore (21), a concave annular portion with its concave side facing in the same direction as the second end face (42) .

8. Equipment according to claim 7, wherein the insert (40) includes, beside the first end face (41), a segment (45.1) of cylindrical outside surface projecting from the shoe (20).

9. Equipment according to any one of claims 2 to 8, wherein the body (60) made of elastically deformable material has an annular shape with an outside surface secured to the bore (21) in the shoe (20), and an inside surface secured to an outside surface of the insert (40).

10. Equipment according to any one of claims 2 to 9, wherein the centering portion (43) projects from the bearing surface of the inertial device and the housing is formed in the insert (40).

11. Equipment according to claim 1 or claim 2, wherein the centering portion and the housing are arranged level with the contact between the bearing surfaces of the support frame and of the corresponding element.

12. Equipment according to any preceding claim, wherein the sliding fit is an H7g6 fit.

13. Equipment according to any preceding claim, wherein the centering portion is arranged to provide centering that is short.
